# EUROPEAN PATENT SPECIFICATION

(11) **EP 3 476 521 B1**
(45) Date of publication and mention of the grant of the patent: **05.08.2020**
(21) Application number: 17198612.8
(22) Date of filing: 26.10.2017
(51) Int. Cl.: B23K 35/28, B23K 9/20

(54) **METHOD FOR THE MANUFACTURE OF A WELDING STUD**
VERFAHREN ZUR HERSTELLUNG EINES SCHWEISSBOLZENS
PROCÉDÉ DE FABRICATION D'UN CLOU À SOUDER

(43) Date of publication of application: 01.05.2019
(73) Proprietor: Newfrey LLC, New Britain, CT 06053 (US)
(72) Inventor: DUCHARDT, Andreas, 35394 Gießen (DE); EISSARA, Bah, 35394 Gießen (DE); REIS, Christian, 35394 Gießen (DE)
(74) Representative: SBD IPAdmin

(56) References cited:
- EP-A2- 1 207 000
- WO-A1-2014/205514
- WO-A1-2017/125309
- DE-U1- 8 612 330
- GB-A- 2 343 398
- JP-A- S61 253 183
- US-A- 2 711 798

## Description

The present invention relates to a method for manufacturing a welding stud. More specifically, the present invention is directed to welding studs made of two different parts with two different materials.

Welding studs are used, notably in the automotive industry, to fix studs onto the surface of workpieces. For example, the welding studs are fastened in a welding process onto a part of a chassis, wherein the welded stud is welded by its welding part to the chassis part, and components are then fastened onto the shaft of the welding stud by use of nuts or clamps.

In many areas of technology, the focus is on lightweight assemblies and constructions. In particular light weight material are used. Lightweight materials might be for example high-strength steel, aluminum, or glass fiber-reinforced polymer composites and may be used replacing heavy steel materials. Such materials can decrease component weight by 10 to 60 percent. In lightweight car bodies, lightweight materials are used as construction materials, notably to reduce the fuel consumption. However, the strength of some of these materials, for example the aluminum alloy is considerably lower than the strength of heavy steel. The lack of strength is problematic when releasable connections of components are to be made. Therefore such interface are still often made with steel.

Documents DE8612330 and WO2014205514 disclose a two parts stud with the first and second parts connected by pressing or by interference fit. In order to provide a light welding stud, document EP1207000 discloses a welding stud comprising a welding portion and a function portion. The welding portion is made of lightweight material and the function portion is made of steel. The function portion has a tip which engages complementary recess of the welding portion and the tip and the recess are connected by a friction welding connection.

The connection by friction welding of materials such like aluminum alloy and steel might be brittly, notably due to the formation of intermetallic phase seams. The contact between the two portions is not always secured, in particularly under vibrating load. Besides, a risk of corrosion may occur. Finally, the friction welding connection enable only few shape or cross-section shape of the portions.

It is hence an object of the present invention to at least alleviate the aforementioned shortcomings. More particularly one objective of the present invention is to provide a light welding stud, easy to manufacture, resistant to corrosion, with a good sealing and a secured connection between the two parts or portions. It is also an object of the present invention to provide a method for manufacturing a welding stud reliable, easy to implement with a minimal space requirement.

The present disclosure provides a welding stud comprising a welding part adapted to be welded to a workpiece, the welding part comprising a recess, the welding part being in a first material, and a shaft extending along a longitudinal axis between a first end portion and a second end portion, the first end portion being inserted into the recess, wherein the shaft is in a second material, different from the first material, wherein the welding part and the shaft are connected together by shrinking of the welding part around the first end portion.

The welding stud is made of two different materials allowing an assembly of the welding stud to different components, without reducing the strength or the torques which might apply to the shaft. The welding part and the shaft are securely connected to each other and different cross section of the shaft may be implemented without creating the risk of producing a poor connection between the shaft and the welding part. The shrinking connection is easy to implement and ensure a better contact between the shaft and the welding part. Thus, the conductivity between this two parts can be improved, for example when these two parts are in a metal material. The shrinking connection allows a form fit and force-type connection between the welding part and the shaft.

The first material is a lightweight material.

In an embodiment, the light material is an aluminium alloy. Thus, the welding stud can be welded to workpiece made of aluminium material.

In an embodiment, an auxiliary medium is provided between the surfaces of the recess and the first end portion in order to improve the connection between the welding part and the shaft. The auxiliary medium may form a separation between the welding part and the shaft such that a better protection against corrosion and/or the electrochemical properties and/or the connection properties are improved. The auxiliary medium allows an adhesive bond between the welding part and the shaft.

As an example, the auxiliary medium is a coating. The coating may be provided in the recess at the end of the manufacture process of the welding part. The coating may also be provided on the shaft.

In an additional embodiment, the auxiliary medium is a solder. The solder can easily compensate dimensional tolerances. The solder can extend in the recess between the first end portion and the walls defining the recess. The thickness of the solder may not be constant around the first end portion such that any manufacturing tolerance are compensated. Besides, the solder allows to better seal the junction between the shaft and the welding part, in order to avoid any corrosion.

In an embodiment, the second material is a steel material. The shaft in steel material enable higher tightening torques, notably for a threaded shaft. However, in other embodiment, the second material might be brass or a copper alloy.

As an example, the shaft comprises a first segment, a second segment and an enlarged flange arranged between the first and the second segment. The enlarged flange separate both segments and form two shoulders.

As an example, the first segment defines the first end portion, and the first segment extends in the recess.

As an example, the first segment has a cross-section which is circular or oval or polygonal. For example the cross-section of the second segment may be a square or a rectangle or a cross. The cross-section may also be circular or oval with protrusion evenly or unevenly distributed over the periphery.

As an example, the second segment comprises a threaded portion. Different elements may be fixed to the second segment with a threaded assembly.

The present invention is directed to a method for the manufacture of a welding stud comprising the steps of:
- providing a welding part adapted to be welded to a workpiece, the welding part comprising a recess, the welding part being in a first material, wherein the recess has a first recess dimension;
- providing a shaft extending along a longitudinal axis between a first end portion and a second end portion, wherein the shaft is in a second material, different from the first material, wherein the first end portion has an end portion dimension,
- heating the welding part such that the area surrounding the recess is dilated and the first recess dimension is increased or cooling the first end portion of the shaft;
- fitting the first end portion in the recess;
- Shrinking the welding part around the first end portion in order to connect the welding part with the shaft.

Such method is easy to implement, and allows to form a welding stud having a shaft with a random cross-section being robust, light and which may be welded through the welding part to different workpiece materials.

In some embodiments, the welding part is heated by induction. The induction heating, once calibrated and set up, is reliable. The induction allows a quick heating with a reduced energy consumption.

In some embodiments, an auxiliary medium is arranged in the recess before the heating.

In some embodiments, the auxiliary medium is a solder.

In some embodiments, the auxiliary medium melt during the heating of the welding part for the expansion of the recess. In one step, both actions are implemented.

In some embodiments, the melted auxiliary medium spreads over the inner surface of the recess during the fitting of the first end portion in the recess. Any manufacturing tolerance may be compensated.

As an example, a cooling device is provided to accelerate the shrinking of the welding part around the first end portion. The cooling device allows to speed up the shrinking. Thus the manufacturing time may be reduced.

Other characteristics and advantages of the invention will readily appear from the following description of embodiments, provided as non-limitative examples, in reference to the accompanying drawings.

In the drawings:
Fig. 1 schematically shows a welding stud with a welding part and a shaft;
Fig. 2 schematically shows different possible cross-section along the A-A axis of the shaft of Fig. 1.

On the different figures, the same reference signs designate identical or similar elements.

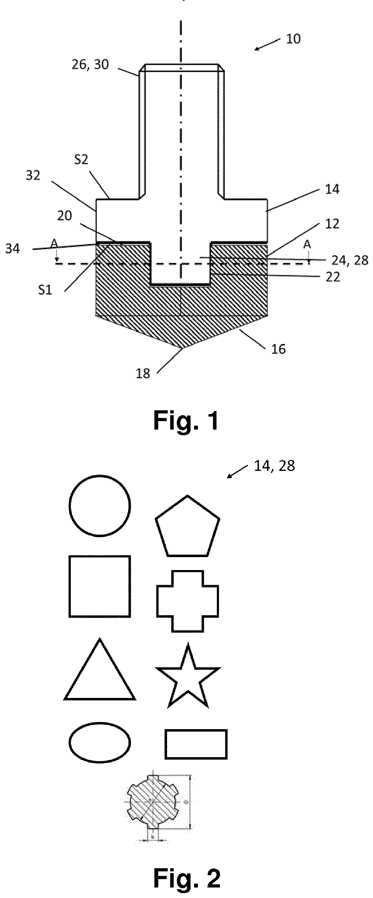

Fig. 1 shows a welding stud 10. The welding stud 10 comprises a welding part 12 and a shaft 14. The welding stud 10 is adapted to be welded to a workpiece, for example to a vehicle body. More particularly the welding part 12 of the welding stud 10 is welded to the body vehicle, whereas the shaft 14 is adapted to be connected to different components.

The welding part 12 is a one-piece part. The welding part is made in a first material. For example the first material is a lightweight material or lightweight metal. The first material may be an aluminum alloy. However, in other embodiments, the first material may be another lightweight material currently used in the automotive industry such as carbon fiber reinforced material ...

The welding part 12 comprises a top portion 16 adapted to be welded to the workpiece. The top portion 16 may be flat or may be provided, as illustrated in Fig. 1, with a tip 18. The tip 18 improves the welding process of the welding stud 10 to the workpiece. More particularly, the first surface 16 may have a conical shape with the edge of the cone being the tip 18. In other embodiments, the top portion comprises several portions extending non parallel to each other and which form the tip 18.

The welding part 12 comprises a rear portion 20 opposite the top portion 16. The rear portion 20 is adapted to face the shaft 14. The rear portion is provided with a recess 22. The recess 22 is a blind hole and not a through hole. The recess 22 comprises a first recess dimension D1. For instance, the recess 22 may have a circular or oval section and the first recess dimension is a diameter of the recess. In other embodiments, the cross-section of the recess may be polygonal and the first recess dimension is the longest distance between two points provided on the lateral surface defining the recess.

The shaft 14 extends along a longitudinal axis X between a first end portion 24 and a second end portion 26. The shaft 14 may be provided as depicted in Fig. 1 with a first segment 28, a second segment 30, and an enlarged flange 32 extending between the first segment 28 and the second segment 30. The first segment 28 defines the first end portion 24. The second segment 30 defines the second end portion 26. The enlarged flange 32 has a cross-section larger than the cross-sections of the first and second segments, such that a first shoulder S1 is formed between the first segment 28 and the enlarged flange 32. A second shoulder S2 is formed between the second segment 30 and the enlarged flange 32.

The shaft 14 is a one-piece shaft. The shaft 14 is made in a second material. The second material is different from the first material. For example the second material is a metal material. More particularly, the second material is a steel. However, other materials may be considered for the first and second material such as plastic material, ceramic, brass, copper alloy ...

More particularly, first and/or second materials may be electrical conductors.

The first segment 28 and the second segment 30 can have similar or different cross-sections. For example the cross-section of the second segment 30 is circular.

The second segment 30 may be provided with a thread. The tread may extend on the entire length of the second segment 30 along the longitudinal axis X, as represented in Fig. 1. In another embodiment, the second segment 30 may be partly provided with a thread, such that the thread extends on a portion only of the length of the second segment 30. The thread illustrates in Fig. 1 is an outer thread. However, in another embodiment, the second segment 30 may be provided with an inner thread or with a flat surface.

The first segment 30 may have different cross-section. Fig. 2 illustrates different possible cross-section of the first segment 30. As visible, the first segment 30 may have a circular or oval or polygonal cross-section. The cross-section may be a square, a rectangle, a cross, a star, a triangle, a heptagon ... The cross-section may also be circular or oval with protrusions or teeth distributed at its periphery. The protrusions or teeth may be evenly distributed or not.

The first end portion 24 and/or the first segment 28 comprises an end portion dimension. The first recess dimension is smaller than the end portion dimension.

The first end portion 24 and/or the first segment 28 is adapted to be inserted in the recess 22 of the welding part 12. The cross-section of the recess may thus have a similar shape to the cross-section shape of the first segment.

In order to insert the first end portion 24 in the recess 22 and to connect the welding part 12 to the shaft 14, the welding part 12 is heated. The heating of the welding part 12 allows the dilatation of the first material and the dimension of the recess increases or expands. More particularly, upon heating, the first recess dimension D1 is increased. The first recess dimension D1 becomes equal to or larger than the end portion dimension Thus, the first end portion 24 can be correctly inserted in the recess 22. In other words, the welding part 12 is thus correctly arranged around the first end portion 24.

A heat device (not represented) may be provided to heat the welding part to a pre-determined temperature. The pre-determined temperature depends on the material and overall dimension of the welding part 12. The heat device is for example an induction device. However, other heat sources such as radiant warmers, resistance heating, lasers ... may be provided.

Once the welding part 12 has been heated to the pre-determined or programmed temperature, the heat device may be turned off and/or removed. The removal of the heat device may occurs after or during the setting of the welding part on the first end portion 24.

The first end portion 24 is inserted in the heated recess without being pre-heated. In other words, the first end portion is at room temperature when inserted in the recess. In another embodiment, the shaft could be cooled before its insertion in the recess. Thus, the first end portion 24 cools the welding part 12 during its insertion.

The welding part 12, with the shaft partly inserted in the recess is then cooled. During the cooling, the welding part retracts such that the welding part 12 shrinks and "adheres" to the first end portion. More specifically, the material of the welding part 12 retracts and by doing so adheres to the first end portion 24. Thus a robust assembly of the shaft 14 with the welding portion 12 is obtained.

In another embodiment, the shaft (or the first end portion 24 of the shaft) is cooled and the welding part stays at room temperature. In this case, the shaft (or the first end portion 24 of the shaft) is retracted due to the cooling such that the first end portion 24 can be inserted into the recess 22. The subsequent return of the shaft to the room temperature allows its expansion and the shrinking with the welding part.

The rear portion 20 of the welding part 12 may or may not contact the enlarged flange 32, and more particularly the first shoulder S1.

An auxiliary medium 34 may be provided to increase the connection between the shaft and the welding part 12. The auxiliary medium 34 is for example a solder or a coating. The auxiliary medium 34 provides a better sealing effect between the shaft and the welding part. The contact between shaft and welding part may be improved, which may improve the conductivity of the welding stud if needed.

The recess may be provided, prior to the heating, with the auxiliary medium. In another embodiment, the first end portion 24 is provided with the auxiliary medium 34.

For example, a solder is arranged in the recess 22 of the welding part 12. The heating of the welding part to perform the assembly with the shaft heats the solder. The solder thus melt. The first end portion 24 is then inserted in the recess 22. During the insertion, the melted solder is displaced on the lateral walls defining the recess around the first end. The melted solder can also fills any gap which may exist between the first end portion 24 and the walls of the recess.

A cooling device may eventually be provided to cool the welding part 12 or the welding stud 10 after the assembly.

In other embodiments of the present invention, the welding part may be provided with a plurality of recesses and the shaft may be provided with a plurality of first end portions, each adapted to be inserted in one corresponding recess, such that a connection by shrinking between the welding part and the shaft is performed through the plurality of recesses and first end portions.

The first end portion 24 may also be provided with a self-tapping thread such that the connection by shrinking is improved.

The welding stud disclosed above may be used as a ground stud. In such case, the second material is a metal material allowing an electrical conduction. However, in other embodiments, the welding stud may not be provided with any electrical conductor and can be used as a fastener for different uses and purposes.

## Claims

1. Method for the manufacture of a welding stud (10) comprising the steps of:
- providing a welding part (12) adapted to be welded to a workpiece, the welding part comprising a recess, the welding part being in a first material, wherein the first material is a lightweight material, wherein the recess has a first recess dimension;
- providing a shaft (14) extending along a longitudinal axis between a first end portion and a second end portion, wherein the shaft is in a second material, different from the first material, wherein the first end portion has an end portion dimension,
- heating the welding part such that the area surrounding the recess is dilated and the first recess dimension is increased or cooling the shaft such that the first end portion (24) is retracted;
- fitting the first end portion in the recess;
- shrinking the welding part around the first end portion in order to connect the welding part with the shaft.

2. Method according to claim 1, wherein the welding part (12) is heated by induction.

3. Method according to claim 1 or claim 2, wherein an auxiliary medium (34) is arranged in the recess before the heating.

4. Method according to claim 3, wherein the auxiliary medium (34) is a solder and wherein the auxiliary medium melt during the heating of the welding part.

5. Method according to claim 4, wherein the melted auxiliary medium (34) spreads over the inner surface of the recess during the fitting of the first end portion in the recess.

6. Method according to claim 1, wherein the first material is an aluminium alloy.

7. Method according to any of the preceding claims, wherein the second material is a steel material.

## Patentansprüche

1. Verfahren für die Herstellung eines Schweißbolzens (10), umfassend die Schritte:
- Bereitstellen eines Schweißteils (12), das angepasst ist, an ein Werkstück geschweißt zu werden, wobei das Schweißteil eine Vertiefung umfasst, das Schweißteil in einem ersten Material ist, wobei das erste Material ein Leichtgewichtmaterial ist, wobei die Vertiefung ein erstes Vertiefungsausmaß aufweist;
- Bereitstellen eines Schaftes (14), der sich entlang einer Längsachse zwischen einem ersten Endabschnitt und einem zweiten Endabschnitt erstreckt, wobei der Schaft in einem zweiten Material ist, das sich von dem ersten Material unterscheidet, wobei der erste Endabschnitt ein Endabschnittsausmaß aufweist,
- Erhitzen des Schweißteils, sodass der Bereich, der die Vertiefung umgibt, erweitert wird und das erste Vertiefungsausmaß erhöht wird, oder Kühlen des Schaftes, sodass der erste Endabschnitt (24) eingezogen wird;
- Einpassen des ersten Endabschnitts in die Vertiefung;
- Schrumpfen des Schweißteils um den ersten Endabschnitt, um das Schweißteil mit dem Schaft zu verbinden.

2. Verfahren nach Anspruch 1, wobei das Schweißteil (12) durch Induktion erhitzt wird.

3. Verfahren nach Anspruch 1 oder Anspruch 2, wobei ein Hilfsmedium (34) vor der Erhitzung in der Vertiefung angeordnet wird.

4. Verfahren nach Anspruch 3, wobei das Hilfsmedium (34) ein Lot ist und wobei das Hilfsmedium während der Erhitzung des Schweißteils geschmolzen wird.

5. Verfahren nach Anspruch 4, wobei das geschmolzene Hilfsmedium (34) sich während der Einpassung des ersten Endabschnitts in die Vertiefung über die Innenfläche der Vertiefung verteilt.

6. Verfahren nach Anspruch 1, wobei das erste Material eine Aluminiumlegierung ist.

7. Verfahren nach einem der vorstehenden Ansprüche, wobei das zweite Material ein Stahlmaterial ist.

## Revendications

1. Procédé pour la fabrication d'un goujon de soudage (10) comprenant les étapes consistant à :
- fournir une partie de soudage (12) adaptée pour être soudée à une pièce usinée, la partie de soudage comprenant un renfoncement, la partie de soudage étant dans un premier matériau, dans lequel le premier matériau est un matériau léger, dans lequel le renfoncement présente une première dimension de renfoncement ;
- fournir un axe (14) s'étendant le long d'un axe longitudinal entre une première partie d'extrémité et une seconde partie d'extrémité, dans lequel l'axe est dans un second matériau, différent du premier matériau, dans lequel la première partie d'extrémité présente une dimension de partie d'extrémité,
- chauffer la partie de soudage de sorte que la zone entourant le renfoncement soit dilatée et la première dimension de renfoncement soit augmentée ou refroidir l'axe de sorte que la première partie d'extrémité (24) soit rétractée ;
- ajuster la première partie d'extrémité dans le renfoncement ;
- contracter la partie de soudage autour de la première partie d'extrémité de façon à raccorder la partie de soudage avec l'axe.

2. Procédé selon la revendication 1, dans lequel la partie de soudage (12) est chauffée par induction.

3. Procédé selon la revendication 1 ou la revendication 2, dans lequel un fluide auxiliaire (34) est agencé dans le renfoncement avant le chauffage.

4. Procédé selon la revendication 3, dans lequel le fluide auxiliaire (34) est une brasure et dans lequel le fluide auxiliaire fond durant le chauffage de la partie de soudage.

5. Procédé selon la revendication 4, dans lequel le fluide auxiliaire (34) fondu se répand sur la surface interne du renfoncement durant l'ajustement de la première partie d'extrémité dans le renfoncement.

6. Procédé selon la revendication 1, dans lequel le premier matériau est un alliage d'aluminium.

7. Procédé selon l'une quelconque des revendications précédentes, dans lequel le second matériau est un matériau en acier.
